# EUROPEAN PATENT APPLICATION

(11) **EP 4 592 348 A1**
(43) Date of publication of application: **30.07.2025**
(21) Application number: 23868267.8
(22) Date of filing: 21.09.2023
(51) Int. Cl.: C08L 67/02, C08L 1/02, C08L 101/16

(54) **BIODEGRADABLE RESIN COMPOSITION**

(30) Priority: 22.09.2022 JP 2022151993
(71) Applicant: Nisshinbo Chemical Inc., Tokyo 103-8650 (JP)
(72) Inventor: NAKASHIMA, Shinichi, Chiba-shi, Chiba 267-0056 (JP); FUKASE, Atsuko, Chiba-shi, Chiba 267-0056 (JP); TANIGUCHI, Akira, Chiba-shi, Chiba 267-0056 (JP)
(74) Representative: Gill Jennings & Every LLP
(86) International application number: PCT/JP2023/034328
(87) International publication number: WO 2024/063146

(57) **Abstract**

This biodegradable resin composition comprises a biodegradable resin, the biodegradable resin composition including one or more components selected from the group consisting of soybean-derived substances and wheat bran, wherein the biodegradable resin is a polybutylene adipate terephthalate.

## Description

### Technical Field

The present disclosure relates to a biodegradable resin composition, in particular, relates to, for example, a biodegrading resin composition high in biodegradability in the ocean.

### Background Art

There is a difference in the rate of biodegradation among biodegradable resins, and biodegradability may be very low in an environment with few microorganisms, for example, in the ocean.

There are known, as methods for enhancing biodegradability of biodegradable resins in the ocean, methods involving mixing compounds dissolved in seawater, with biodegradable resins, and methods involving allowing bacteria for degrading biodegradable resins to be contained in biodegrading resins in advance.

For example, Patent Document 1 discloses a biodegradable resin composition containing an aliphatic polyester-based biodegradable resin as a biodegradable resin, and containing corn gluten meal.

In addition, Patent Document 2 discloses a biodegradable resin composition in which a biodegradability promoter with defatted rice bran or the like compounded therein is mixed with a biodegradable resin such as polybutylene succinate adipate or polybutylene adipate terephthalate.

Furthermore, Patent Document 3 discloses a biodegradable resin composition in which rice bran powdered as a substance for promoting the rate of biodegradation is mixed with a polycaprolactone resin.

Additionally, Patent Document 4 discloses a biodegradable resin composition in which casein or the like is mixed with a biodegradable resin such as polybutylene succinate adipate or polybutylene adipate terephthalate.

### Citation List

### Patent Document

Patent Document 1: Japanese Patent Application Publication No. 2004-002687
Patent Document 2: Japanese Patent Application Publication No. 2021-091846
Patent Document 3: Japanese Patent Application Publication No. 2001-323177
Patent Document 4: International publication WO 2021/241712

### Summary of Invention

### Technical Problem

The present inventors have made intensive studies, and it has been thus found that all the above-mentioned biodegradable resin compositions have still not been sufficient in biodegradability in the ocean. It has also been found that the above-mentioned biodegradability promoter and the like have still not been sufficient in performance for an enhancement in biodegradability in the ocean, of, in particular, polybutylene adipate terephthalate among biodegradable resins.

Accordingly, an problem of the present disclosure is to provide a biodegradable resin composition which can allow a molded article high in biodegradability in the ocean to be produced even when includes polybutylene adipate terephthalate as a biodegradable resin.

### Solution to Problem

The present inventor has made intensive studies in order to solve the above problems, and as a result, has found that the above problems can be solved by mixing a specified component with polybutylene adipate terephthalate as a biodegradable resin and has completed the present disclosure.

The present disclosure is as follows.
[1] A biodegradable resin composition comprising a biodegradable resin, wherein
   the biodegradable resin composition comprises one or more components selected from the group consisting of a soybean-derived substance and a wheat bran, and
   the biodegradable resin is polybutylene adipate terephthalate.
[2] The biodegradable resin composition according to [1], wherein the soybean-derived substance is one or more selected from the group consisting of a soybean meal, a soybean hull, a soybean fiber, a soybean curd refuse, a soybean curd refuse fiber, and a soy sauce lees.
[3] The biodegradable resin composition according to [1], wherein the biodegradable resin composition comprises one or more components selected from the group consisting of a soybean meal, a wheat bran and a soybean curd refuse.
[4] The biodegradable resin composition according to any of [1] to [3], wherein a content of the biodegradable resin is 50% by weight or more.
[5] The biodegradable resin composition according to any of [1] to [4], wherein a content of the component is 5 to 25% by weight.
[6] A molded article of the biodegradable resin composition according to any of [1] to [5].
[7] The molded article according to [6], wherein the molded article is in the form of a thin film.
[8] The molded article according to [6] or [7], wherein the molded article is for a product to be contacted with seawater.
[9] Use of the molded article according to [8], for a product to be contacted with seawater.
[10] A method for producing a biodegradable resin composition, the method comprising a step of mixing at least one or more components selected from the group consisting of a soybean-derived substance and a wheat bran, and a biodegradable resin, wherein
   the biodegradable resin is polybutylene adipate terephthalate.
[11] The method for producing a biodegradable resin composition according to [10], wherein the component is at least one or more components selected from the group consisting of a soybean meal, a wheat bran and a soybean curd refuse.
[12] Use of at least one or more components selected from the group consisting of a soybean-derived substance and a wheat bran, for preparation of a biodegradable resin composition containing at least polybutylene adipate terephthalate as a biodegradable resin.
[13] The use according to [12], wherein the component is at least one or more components selected from the group consisting of a soybean meal, a wheat bran and a soybean curd refuse.
[14] A method for enhancing marine biodegradability of a molded article of a biodegradable resin composition obtained by mixing at least one or more components selected from the group consisting of a soybean-derived substance and a wheat bran, and at least polybutylene adipate terephthalate as a biodegradable resin.
[15] The method according to [14], wherein the component is at least one or more components selected from the group consisting of a soybean meal, a wheat bran and a soybean curd refuse.

### Advantageous Effect of Invention

The present disclosure provides a biodegradable resin composition which can allow a molded article high particularly in biodegradability in the ocean to be produced even when includes polybutylene adipate terephthalate as a biodegradable resin, and the like.

### Description of Embodiments

Hereinafter, the present disclosure is described based on specific embodiments, but each configuration, any combination thereof, and the like in each embodiment are merely illustrative, and addition, omitting, replacement, and any other modification of such each configuration can be appropriately made within the scope not departing from the gist of the present disclosure. The present disclosure is not limited by any embodiment, but is limited by the scope of the claims.

Herein, "high biodegradation in the ocean" in the present disclosure means excellent biodegradability in a state of contact in the ocean or contact with seawater for a certain period or more.

The description of "XX or more and YY or less" or "XX to YY" representing a numerical value range means a numerical value range including the lower limit and the upper limit as end points, unless particularly noted. In a case where a numerical value range is described stepwise, the upper limit and the lower limit of such a numerical value range can be arbitrarily combined.

The expression "A or B" in the present disclosure can be read as "at least one selected from the group consisting of A and B".

In addition, "a plurality of" in the present disclosure means "2 or more".

### <Biodegradable resin>

The biodegradable resin composition contains a biodegradable resin. The biodegradable resin is polybutylene adipate terephthalate.

The polybutylene adipate terephthalate is a polyester in which adipic acid, 1,4-butanediol and terephthalic acid are copolymerized. The polybutylene adipate terephthalate may be produced according to a known production method, or a commercially available product may be used.

The content of the biodegradable resin included in the biodegradable resin composition of the present disclosure is not particularly limited, and is preferably 50% by weight or more in order to allow a molded article of the biodegradable resin composition to ensure proper strength. When the content of the biodegradable resin is 50% by weight or more, strength of the molded article is enhanced. Even in a case where the biodegradable resin composition of the present disclosure has a high content of 50% by weight or more of a biodegradable resin which tends to be inferior in biodegradability in the ocean, the biodegradable resin composition includes a component for promoting marine degradability, described below, thereby allowing the molded article to ensure sufficient biodegradability in the ocean. In a case where the content of a component for promoting marine degradability, described below, is too high in the biodegrading resin composition, it is expected that uniform dispersion of the component is made difficult and the component is aggregated in the molded article to make good progression of biodegradation difficult. The content of the biodegradable resin is more preferably 70% by weight or more, further preferably 80% by weight or more. On the other hand, the upper limit is preferably 97% by weight or less, more preferably 95% by weight or less, further preferably 93% by weight or less in terms of the balance with the content of a component for promoting marine degradability, described below. The content of the biodegradable resin is, preferably, for example, 50 to 97% by weight, 70 to 95% by weight, or 80 to 93% by weight.

### <Component for promoting marine degradability>

The biodegradable resin composition of the present disclosure includes one or more components selected from the group consisting of a soybean-derived substance and a wheat bran, as component(s) different from the biodegrading resin. The soybean-derived substance is not particularly limited as long as it is a substance derived from soybean, and examples of a specific type include one or more selected from the group consisting of a soybean meal, a soybean hull, a soybean fiber, a soybean curd refuse, a soybean curd refuse fiber, a soy sauce lees, and the like. The soybean-derived substance is preferably one or more selected from the group consisting of a soybean meal, a soybean hull, and a soybean fiber from the viewpoint that favorable biodegradability can be ensured.

Among them, one or more components selected from the group consisting of a soybean meal, a wheat bran and a soybean curd refuse are preferably included from the viewpoint that favorable biodegradability can be ensured.

When the biodegradable resin composition includes the above component(s), a molded article of the biodegradable resin composition, even if contains polybutylene adipate terephthalate, exhibits favorable biodegradability even in an environment in contact with seawater, like the ocean.

It is presumed by the present inventor that the reason for this is because the resin composition and its molded article each include the above component(s), thereby making it easy to aggregate microorganisms contained in seawater, on a surface of the molded article, to allow assimilation of the above component(s) and biodegradable resin by microorganisms to efficiently occur.

Thus, the biodegradable resin composition is preferably a marine-biodegradable resin composition. The marine-biodegradable resin composition refers to a biodegradable resin composition high in biodegradation in the ocean.

The soybean meal is a cake after squeezing the fat portion of soybean. The soybean meal can also be obtained as a cake formed by squeezing the fat portion from soybeans, or a commercially available product can also be used. The soybean meal is preferable because it is preferred by microorganisms in seawater, and it is high in effect of biodegradability promotion.

The soybean hull is a hull of soybean. The soybean hull can also be obtained by peeling from soybean not treated with any particular treatment, or can also be easily obtained by peeling from soybeans treated, for example, heated, or a commercially available product can also be used.

The soybean fiber is a dietary fiber obtained from the soybean meal. The soybean fiber can be obtained by, for example, steaming, extracting, and separating the soybean meal, to separate an insoluble dietary fiber and a water-soluble dietary fiber, or a commercially available product can also be used. In other words, the soybean fiber may be an insoluble dietary fiber or may be a water-soluble dietary fiber.

The wheat bran is a by-product obtained in production of wheat flour from wheat. Specifically, wheat is configured from endosperm, germ, and husk (skin), and the wheat bran refers to the remaining portion obtained by removing endosperm from wheat. The wheat bran can also be obtained as the residue resulting from removal of endosperm and germ from wheat, or a commercially available product can also be used.

The soybean curd refuse is a cake after squeezing soymilk in the course of production of soybean curd from soybeans. The soybean curd refuse can also be obtained as a cake resulting from squeezing soymilk in the course of production of soybean curd from soybeans, or a commercially available product can also be used. A dry powder obtained by evaporating moisture through a drying step is preferably used.

The soybean curd refuse fiber is a dietary fiber obtained from a soybean curd refuse. The soybean curd refuse fiber can be obtained by, for example, steaming, extracting, and separating the soybean curd refuse, to separate an insoluble dietary fiber and a water-soluble dietary fiber, or a commercially available product can also be used. In other words, the soybean curd refuse fiber may be an insoluble dietary fiber or may be a water-soluble dietary fiber.

The soy sauce lees correspond to a by-product generated during squeezing the unrefined portion in production of the soy sauce with soybean as a raw material. One obtained as the by-product may be used for the soy sauce lees, or a commercially available product can also be used.

The above components may be each used singly or in combination of two or more kinds thereof. Among the above components, the soybean meal can be preferably exemplified.

The component for promoting marine degradability is preferably one obtained by pulverization tailored to the thickness of the molded article. For example, the component is preferably pulverized.

The maximum particle size is preferably 200 µm or less, more preferably 100 µm or less, further preferably 75 µm or less. The lower limit of the maximum particle size is not particularly limited, and may be 0.01 µm or may be 0.10 µm. The maximum particle size is preferably, for example, 0.01 to 200 µm, 0.10 to 100 µm, or 0.10 to 75 µm.

The average particle size (in the present disclosure, also referred to as "D50 (median size)") is preferably 100 µm or less, more preferably 50 µm or less, further preferably 30 µm or less. The lower limit of the median size is not particularly limited, and may be 0.01 µm or may be 0.10 µm. The median size is preferably, for example, 0.01 to 100 µm, 0.10 to 50 µm, or 0.10 to 30 µm.

Such a range is particularly preferable in a case where the molded article is in the form of a thin film. The maximum particle size and the median size can be adjusted by modifying the pulverization time and conditions of classification with a sieve or the like. The median size in the present disclosure refers to a median value on a volume basis, as measured by a laser diffraction/scattering type particle size distribution measurement method.

The content of the component in the biodegradable resin composition of the present disclosure is preferably 3% by weight or more, more preferably 5% by weight or more, further preferably 7% by weight or more from the viewpoint of an enhancement in aggregation ability of microorganisms to the molded article of the resin composition and thus an enhancement in biodegradability of the molded article in an environment in contact with seawater, like the ocean. On the other hand, the upper limit is preferably 45% by weight or less, more preferably 25% by weight or less, further preferably 20% by weight or less in terms of the balance with the above-mentioned content of the biodegradable resin. The content is preferably, for example, 3 to 45% by weight, 5 to 25% by weight, or 7 to 20% by weight.

The weight ratio between the biodegradable resin and one or more components selected from the group consisting of a soybean-derived substance and a wheat bran in the biodegradable resin composition of the present disclosure can be, for example, 0.5 to 40, and is preferably 1 to 35, more preferably 5 to 30, under the assumption that the weight of the biodegradable resin is 100.

The biodegradable resin composition may include a carbodiimide group-containing compound.

The carbodiimide group-containing compound is one having one or more carbodiimide groups in its molecule, and can be synthesized by a commonly well-known method, for example, by subjecting each polyisocyanate to a decarboxylation-condensation reaction at a temperature of about 70°C or more in no solvent or in an inert solvent, with an organophosphorus compound or an organometallic compound as a catalyst. The carbodiimide group-containing compound is not particularly limited as long as it is a compound having a carbodiimide group in one molecule, and is preferably a compound having two or more carbodiimide groups in one molecule.

Examples of monocarbodiimide having one carbodiimide group in one molecule include N,N'-diphenylcarbodiimide, N,N'-di-2,6-diisopropylphenylcarbodiimide, N,N'-di-2,6-dimethylphenylcarbodiimide, N,N'-di-2,6-di-tert-butylphenylcarbodiimide, N-tolyl-N'-phenylcarbodiimide, N,N'-di-p-nitrophenylcarbodiimide, N,N'-di-p-aminophenylcarbodiimide, N,N'-di-p-hydroxyphenylcarbodiimide, N-octadecyl-N'-phenylcarbodiimide, N-benzyl-N'-phenylcarbodiimide, N,N'-di-o-ethylphenylcarbodiimide, N,N'-di-p-ethylphenylcarbodiimide, N,N'-di-o-isopropylphenylcarbodiimide, N,N'-di-p-isopropylphenylcarbodiimide, N,N'-di-o-isobutylphenylcarbodiimide, N,N'-di-p-isobutylphenylcarbodiimide, N,N'-di-2,6-diethylphenylcarbodiimide, N,N'-di-2-ethyl-6-isopropylphenylcarbodiimide, N,N'-di-2-isobutyl-6-isopropylphenylcarbodiimide, N,N'-di-2,4,6-trimethylphenylcarbodiimide, N,N'-di-2,4,6-triisopropylphenylcarbodiimide, or N,N'-di-2,4,6-triisobutylphenylcarbodiimide.

One produced by various methods can be used for a polycarbodiimide compound having two or more carbodiimide groups in one molecule, and one produced by a conventional production method of polycarbodiimide [for example, US. Patent No. 2941956, JP-B No. S47-33279, J. Org. Chem. 28, 2069-2075 (1963), Chemical Review 1981, Vol.81 No. 4, p 619-621] can be basically used.

Examples of organic diisocyanate as a synthesis raw material in production of the polycarbodiimide compound can include aromatic diisocyanate, aliphatic diisocyanate, alicyclic diisocyanate, and any mixture thereof, and specific examples can include 1,5-naphthalene diisocyanate, 4,4'-diphenylmethane diisocyanate, 4,4'-diphenyl dimethyl methane diisocyanate, 1,3-phenylene diisocyanate, 1,4-phenylene diisocyanate, 2,4-tolylene diisocyanate, 2,6-tolylene diisocyanate, a mixture of 2,4-tolylene diisocyanate and 2,6-tolylene diisocyanate, hexamethylene diisocyanate, cyclohexane-1,4-diisocyanate, xylylene diisocyanate, isophorone diisocyanate, dicyclohexylmethane-4,4'-diisocyanate, methylcyclohexane diisocyanate, tetramethylxylylene diisocyanate, 2,6-diisopropylphenyl isocyanate, or 1,3,5-triisopropylbenzene-2,4-diisocyanate.

Among them, an aliphatic (including alicyclic) organic diisocyanate is preferable and in particular isophorone diisocyanate, dicyclohexylmethane-4,4'-diisocyanate, tetramethylxylylene diisocyanate or any mixture of two kinds thereof is more preferably used from the viewpoint that the degree of polymerization of the polycarbodiimide compound is easily controlled, discoloration due to ultraviolet light hardly occurs and the appearance of the molded article of the composition can be improved.

In the case of the polycarbodiimide compound, control to an appropriate degree of polymerization can be achieved by stopping a polymerization reaction by cooling or the like in the middle. In this case, a terminal is an isocyanate group. Furthermore, in order to achieve control to an appropriate degree of polymerization, a method is also adopted in which a compound reactive with a terminal isocyanate group of the polycarbodiimide compound, for example, a monoisocyanate compound, is used to encapsulate all or some of the remaining terminal isocyanate groups. The degree of polymerization is preferably controlled in terms of an enhancement in quality because an enhancement in compatibility with biodegradable plastic and/or an enhancement in storage stability can be achieved.

Examples of such a monoisocyanate compound for encapsulating a terminal of the polycarbodiimide compound and thus controlling the degree of polymerization can include phenyl isocyanate, tolyl isocyanate, dimethylphenyl isocyanate, cyclohexyl isocyanate, butyl isocyanate, or naphthyl isocyanate.

The terminal encapsulant for encapsulating a terminal of the polycarbodiimide compound and thus controlling the degree of polymerization is not limited to the above monoisocyanate compound, and examples can include an active hydrogen compound capable of reacting with an isocyanate group, for example, (i) an -OH group-containing aliphatic, aromatic or alicyclic compound, methanol, ethanol, phenol, cyclohexanol, N-methylethanolamine, polyethylene glycol monomethyl ether, or polypropylene glycol monomethyl ether; (ii) an -NH- group-containing diethylamine or dicyclohexylamine; (iii) a -NH₂ group-containing butylamine or cyclohexylamine; (iv) a -COOH group-containing succinic acid, benzoic acid or cyclohexanoic acid; (v) an -SH group-containing ethyl mercaptan, allyl mercaptan, or thiophenol; (vi) an epoxy group-containing compound; and (vii) an acid anhydride such as acetic anhydride, methyl tetrahydrophthalic anhydride, or methyl hexahydrophthalic anhydride.

Among them, the -OH group-containing compound used here is preferably polyethylene glycol monomethyl ether, the -NH- group-containing compound used here is preferably dicyclohexylamine, or the -NH₂ group-containing compound used here is preferably cyclohexylamine, more preferably cyclohexylamine, from the viewpoint that terminal encapsulating capable of improving appearance can be easily made.

The carbodiimide group-containing compound may be used singly or in any combination of two or more kinds thereof at any ratio.

The content of the carbodiimide group-containing compound in the biodegradable resin composition (the total content in the case of a plurality of kinds included) is not particularly limited, and is preferably 0.1% by weight or more, more preferably 0.2% by weight or more, further preferably 0.5% by weight or more from the viewpoint that appearance can be improved. On the other hand, the upper limit is preferably 10% by weight or less, more preferably 5% by weight or less, further preferably 3% by weight or less in terms of the balance with the contents of the above-mentioned biodegradable resin and at least one or more components selected from the group consisting of a soybean-derived substance and a wheat bran. The content is preferably, for example, 0.1 to 10% by weight, 0.2 to 5% by weight, or 0.5 to 3% by weight.

### <Other additive components>

The biodegradable resin composition of the present disclosure may contain still another component as long as the effects thereof are not impaired. Examples of such still another component include a pigment, a filler, a leveling agent, a surfactant, a dispersant, an ultraviolet absorber, a flame retardant, an antioxidant, a plasticizer, a colorant, or a crosslinker.

### <Method for producing biodegradable resin composition>

The method for producing the biodegradable resin composition of the present disclosure is not particularly limited, and a known method can be used.

One example of a method for producing a biodegradable resin is a method for producing a biodegradable resin composition, the method including
a step of mixing at least one or more components selected from the group consisting of a soybean-derived substance and a wheat bran, and a biodegradable resin, in which
the biodegradable resin is polybutylene adipate terephthalate.

The mixing method in the above mixing step is not particularly limited, and examples thereof include a method in which a mixture of the components is melt-kneaded by various uniaxial or multiaxial extruder at a predetermined temperature, for example, a temperature of about 120 to 200°C. The components may be collectively kneaded, or any component thereof may be kneaded and then the remaining components may be added and kneaded.

### <Molded article>

A molded article can be produced with the biodegradable resin composition of the present disclosure. The method for producing the molded article is not limited, and the molded article can be produced by heating the biodegradable resin composition prepared by the above method, to a temperature equal to or more than the softening point, molding the biodegradable resin composition so that desired shape and size are achieved, and cooling and curing the resultant. In other words, the molded article of the biodegradable resin composition may be a molded article obtained by curing the biodegradable resin composition.

The molded article is preferably in the form of a thin film. The molded article in the form of a thin film refers to, for example, a molded article having a thickness of 2000 µm or less. The thickness of the molded article is, for example, 0.1 to 2000 µm or 1 to 2000 µm.

The application of the molded article is not particularly limited, and examples thereof can include a general-purpose article such as a film, a sheet, a tray, or a garbage bag. Such a general-purpose article also encompasses one which can be disposed in the ocean after use even if not contacted with seawater during use. The thickness of the film can be, for example, 1 µm or more and 100 µm or less, and the thickness of the sheet can be, for example, 100 µm or more and 2000 µm or less. The thickness of the garbage bag can be, for example, 1 µm or more and 70 µm or less. Furthermore, examples of the application of the molded article can also include a product to be contacted with seawater. Examples of the product to be contacted with seawater can include any product for use in the fishing industry, for example, fishing implements including fishing lines and nets. In a case where a molded article obtained with the biodegradable resin composition of the present disclosure is used for a product to be contacted with seawater, the molded article is not immediately degraded during use. On the other hand, the molded article, if lost in the ocean by an unexpected occurrence, is degraded in the ocean due to favorable marine biodegradability thereof, and thus hardly remains in the ocean, this remaining being problematic in recent years.

A mode is exemplified in which the rate of degradation of the molded article obtained with the biodegradable resin composition of the present disclosure, in the ocean, for example, in the case of immersion in seawater kept at 30°C for 1.5 months is decreased by 10% by weight or more with, as reference, the original weight of a film having a thickness of 50 µm.

More specifically, a mode is exemplified in which the rate of degradation is decreased by 20% by weight or more or 15% by weight or more in a molded article having a thickness of 50 µm, of a biodegradable resin composition with a soybean meal added to polybutylene adipate terephthalate, the rate of degradation is decreased by 15% by weight or more or 10% by weight or more in the case of use of a wheat bran, and the rate of degradation is decreased by 15% by weight or more or 10% by weight or more in the case of use of a soybean curd refuse.

For the above reasons, the molded article of the biodegradable resin composition of the present disclosure is suited to use for a product which can accidently flow out in the ocean (for example, the above general-purpose article) or a product to be contacted with seawater, in particular, a product to be intendedly contacted with seawater (for example, the above product for use in the fishing industry).

It can be seen based on the above description that, according to the present disclosure, a mode is preferable in which at least one or more components selected from the group consisting of a soybean-derived substance and a wheat bran are used in order to enhance marine biodegradability of a biodegradable resin composition including at least polybutylene adipate terephthalate as a biodegradable resin.

The above predetermined components can be used in preparation of the biodegradable resin composition, to provide a resin composition for providing a molded article high in marine biodegradability.

The same conditions as in the contents described in the section "Biodegradable resin composition" can be applied with respect to the type of the biodegradable resin composition and the amount thereof added to the resin composition, and the amount of the at least one or more components selected from the group consisting of a soybean-derived substance and a wheat bran, added to the resin composition.

The present disclosure also includes a method for enhancing marine biodegradability of a molded article of a resin composition obtained by mixing at least one or more components selected from the group consisting of a soybean-derived substance and a wheat bran, and at least polybutylene adipate terephthalate as a biodegradable resin. In other words, the method is a method for enhancing marine biodegradability of a molded article of a biodegradable resin composition obtained by mixing at least one or more components selected from the group consisting of a soybean-derived substance and a wheat bran, with a biodegradable resin composition containing at least polybutylene adipate terephthalate as a biodegradable resin. The method can provide a molded article higher in marine biodegradability as compared with a molded article of a biodegradable resin composition not containing at least one or more components selected from the group consisting of a soybean-derived substance and a wheat bran.

As described above, at least one or more components selected from the group consisting of a soybean-derived substance and a wheat bran can be added to a biodegradable resin composition including polybutylene adipate terephthalate being a biodegradable resin recognized not to be so high in marine biodegradability, thereby clearly enhancing marine biodegradability of a molded article of the biodegradable resin composition.

The same conditions as in the contents described in the section "Biodegradable resin composition" can be applied with respect to the type of the biodegradable resin composition and the amount thereof added to the resin composition, and the amount of the at least one or more components selected from the group consisting of a soybean-derived substance and a wheat bran, added to the resin composition.

The content described in the section <Molded article> can be applied with respect to the method for molding the resin composition obtained with the above method, and the application of the molded article thereof.

### Examples

Hereinafter, the present disclosure is specifically described with reference to Examples. However, the present disclosure is not limited to any mode of the following Examples.

Each raw material used in Examples and Comparative Examples below was obtained by recovering one formed by pulverizing each of a soybean meal, a wheat bran, a soybean curd refuse, a corn gluten meal, a defatted rice bran, a casein, a soybean hull, a soybean fiber, a soybean curd refuse fiber, and a soy sauce lees, with a desktop pulverizer (Wonder Blender WB-1, manufactured by OSAKA CHEMICAL CO., LTD.) and then allowing the resultant to pass through a mesh having an aperture of 75 µm.

### <Example 1> Kneading of polybutylene adipate terephthalate (PBAT) and soybean meal

A resin composition was obtained by kneading (melt-kneading) 90% by weight of polybutylene adipate terephthalate (Mater-bi ES01G: manufactured by Novamont S.p.A.) and 10% by weight of a soybean meal (N7-P1-K1: manufactured by SHOWA SANGYO CO., LTD.) with a laboratory mixer under a condition of 150°C for 6 minutes. Here, each blank in the column "Raw material" in Table 1 represents no addition. The numerical value with respect to each raw material in Table 1 is expressed by "% by weight".

### <Examples 6 and 10>

Each resin composition was obtained in the same manner as in Example 1 except that the soybean meal in Example 1 was changed to each of a wheat bran (bran: manufactured by SHOWA SANGYO CO., LTD.) and a soybean curd refuse (soybean curd refuse powder: manufactured by TAKAHASHI INC.).

### <Examples 2 to 5, 7 to 9, and 11 to 13>

Each resin composition was obtained in the same manner as in Example 1 except that the values (% by weight) with respect to the polybutylene adipate terephthalate, and the soybean meal, the wheat bran or the soybean curd refuse were those described in Table 1.

### <Examples 14 to 17>

Each resin composition was obtained in the same manner as in Example 3 except that the soybean meal in Example 3 was changed to each of a soybean hull (manufactured by Shimizu Seifun Kojyo Co., Ltd.), a soybean fiber (manufactured by Food Bridge Japan Corp.), a soybean curd refuse fiber (manufactured by Nippon Garlic Corporation), and a soy sauce lees (manufactured by Mitsuru-shoyu).

### <Comparative Example 1>

A resin composition was obtained in the same manner as in Example 1 except that the soybean meal in Example 1 was not used.

### <Comparative Examples 2 to 4>

Each resin composition was obtained in the same manner as in Example 1 except that the soybean meal in Example 1 was changed to each of a corn gluten meal (corn gluten meal: manufactured by KOGOSTCH Co., Ltd.), a defatted rice bran (defatted bran: manufactured by Boso oil and fat Co., Ltd.), and a casein (casein: manufactured by KANTO CHEMICAL CO., INC.).

### <Comparative Example 5>

A resin composition was obtained in the same manner as in Example 3 except that the polybutylene adipate terephthalate in Example 3 was changed to polylactic acid (Nw-2003D: manufactured by NatureWorks).

### <Marine biodegradability test>

The resin compositions obtained by melt-kneading were each pressed by a flat plate at 150°C, to produce a sheet having a thickness of about 50 µm, and the sheet was formed into a 20-mm square sheet. Such each sheet was washed with ethanol, dried in vacuum, thereafter weighed, surrounded with a wire net, and then immersed in a water tank in which seawater kept at 30°C was placed. After a lapse of 1.5 months, the wire net was taken out, the sheet was washed, dried and then weighed in the same manner as that before the test, to determine the proportion of weight loss before and after the test, and evaluation was performed according to the following evaluation criteria. The results are shown in Table 1.

### [Evaluation criteria]

5: a proportion of weight loss before and after the test, of 20% by weight or more.
4: a proportion of weight loss before and after the test, of 15% by weight or more and less than 20% by weight.
3: a proportion of weight loss before and after the test, of 10% by weight or more and less than 15% by weight.
2: a proportion of weight loss before and after the test, of 8% by weight or more and less than 10% by weight.
1: a proportion of weight loss before and after the test, of less than 8% by weight.

**[Table 1]**

| | Example | | | | | | | | | | | | | | | | | Comparative Example | | | | |
|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 1 | 2 | 3 | 4 | 5 |
| PBAT | 95 | 93 | 90 | 80 | 75 | 95 | 93 | 90 | 80 | 95 | 93 | 90 | 80 | 90 | 90 | 90 | 90 | 100 | 90 | 90 | 90 | |
| PLA | | | | | | | | | | | | | | | | | | | | | | 90 |
| soybean meal | 5 | 7 | 10 | 20 | 25 | | | | | | | | | | | | | | | | | 10 |
| a wheat bran | | | | | | 5 | 7 | 10 | 20 | | | | | | | | | | | | | |
| soybean curd refuse | | | | | | | | | | 5 | 7 | 10 | 20 | | | | | | | | | |
| corn gluten meal | | | | | | | | | | | | | | | | | | | 10 | | | |
| defatted rice bran | | | | | | | | | | | | | | | | | | | | 10 | | |
| casein | | | | | | | | | | | | | | | | | | | | | 10 | |
| soybean hull | | | | | | | | | | | | | | 10 | | | | | | | | |
| soybean fiber | | | | | | | | | | | | | | | 10 | | | | | | | |
| soybean curd refuse fiber | | | | | | | | | | | | | | | | 10 | | | | | | |
| soy sauce lees | | | | | | | | | | | | | | | | | 10 | | | | | |
| marine biodegradability | 4 | 5 | 5 | 5 | 4 | 3 | 4 | 4 | 4 | 3 | 4 | 4 | 4 | 5 | 5 | 4 | 4 | 1 | 1 2 | 2 | 2 | 1 |

In the Table, PBAT represents polybutylene adipate terephthalate and PLA represents polylactic acid.

As clear from the evaluation results shown in Table 1, it has been found that a specified component for promoting marine biodegradability can be mixed with a biodegradable resin, to significantly enhance marine biodegradability.

It is supposed from these results that a biodegradable resin composition contains a specified component for promoting marine biodegradability, to allow a large amount of microorganisms in seawater to be accumulated in a biodegradable resin of a molded article thereof, resulting in an enhancement in biodegradability.

### Industrial Applicability

The present disclosure can provide a biodegradable resin composition which can be used particularly for production of a molded article high in biodegradability in the ocean.

## Claims

1. A biodegradable resin composition comprising a biodegradable resin, wherein
the biodegradable resin composition comprises one or more components selected from the group consisting of a soybean-derived substance and a wheat bran, and
the biodegradable resin is polybutylene adipate terephthalate.

2. The biodegradable resin composition according to claim 1, wherein the soybean-derived substance is one or more selected from the group consisting of a soybean meal, a soybean hull, a soybean fiber, a soybean curd refuse, a soybean curd refuse fiber, and a soy sauce lees.

3. The biodegradable resin composition according to claim 1, wherein the biodegradable resin composition comprises one or more components selected from the group consisting of a soybean meal, a wheat bran, and a soybean curd refuse.

4. The biodegradable resin composition according to any one of claims 1 to 3, wherein a content of the biodegradable resin is 50% by weight or more.

5. The biodegradable resin composition according to any one of claims 1 to 4, wherein a content of the component is 5 to 25% by weight.

6. A molded article of the biodegradable resin composition according to any one of claims 1 to 5.

7. The molded article according to claim 6, wherein the molded article is in the form of a thin film.

8. The molded article according to claim 6 or 7, wherein the molded article is for a product to be contacted with seawater.

9. Use of the molded article according to claim 8, for a product to be contacted with seawater.

10. A method for producing a biodegradable resin composition, the method comprising a step of mixing at least one or more components selected from the group consisting of a soybean-derived substance and a wheat bran, and a biodegradable resin, wherein
the biodegradable resin is polybutylene adipate terephthalate.

11. The method for producing a biodegradable resin composition according to claim 10, wherein the component is at least one or more components selected from the group consisting of a soybean meal, a wheat bran, and a soybean curd refuse.

12. Use of at least one or more components selected from the group consisting of a soybean-derived substance and a wheat bran, for preparation of a biodegradable resin composition containing at least polybutylene adipate terephthalate as a biodegradable resin.

13. The use according to claim 12, wherein the component is at least one or more components selected from the group consisting of a soybean meal, a wheat bran, and a soybean curd refuse.

14. A method for enhancing marine biodegradability of a molded article of a biodegradable resin composition obtained by mixing at least one or more components selected from the group consisting of a soybean-derived substance and a wheat bran, and at least polybutylene adipate terephthalate as a biodegradable resin.

15. The method according to claim 14, wherein the component is at least one or more components selected from the group consisting of a soybean meal, a wheat bran, and a soybean curd refuse.
